# EUROPEAN PATENT APPLICATION

(11) **EP 1 047 171 A1**
(43) Date of publication of application: **25.10.2000**
(21) Application number: 99123752.0
(22) Date of filing: 30.11.1999
(51) Int. Cl.: H02G 11/02, H01R 13/72, B65H 75/44

(54) **Stopper tool for cable reel**

(30) Priority: 22.04.1999 JP 272499
(71) Applicant: NICHIDO KOGYO KABUSHIKI KAISHA, Moriguchi-shi, Osaka (JP)
(72) Inventor: Okamoto, Isao, Katano-shi, Osaka (JP)
(74) Representative: Prüfer, Lutz H., Dipl.-Phys.

(57) **Abstract**

A stopper tool for a cable reel which prevents the rotation of the cable reel with loose restraining force regardless of whether the cable reel is used, not used, or in a preparation state for use is provided. The tool includes an engaging portion (11) provided at one end to which a rim (5) of a side plate of a rotary drum is fit, a winding portion (13) provided at the other end and wound around and engaged at a component forming the cable reel in accordance with the size of the diameter of the component, and a bellows portion (12) provided between the engaging portion and the winding portion to generate tensile force when the rotary drum begins to rotate while the stopper tool is mounted at the cable reel. Thus, the rotation of the cable reel can be easily prevented, yet only to such a mild level that the length of the cable can still be adjusted while the stopper tool is mounted.

## Description

### BACKGROUND OF THE INVENTION

### Field of the Invention

The present invention relates to a stopper tool for a cable reel which holds back the rotation of the cable reel degrading the work efficiency and the arrayed state with loose restraining force irrespectively of whether the cable reel is used, not used or going to be used.

### Description of the Background Art

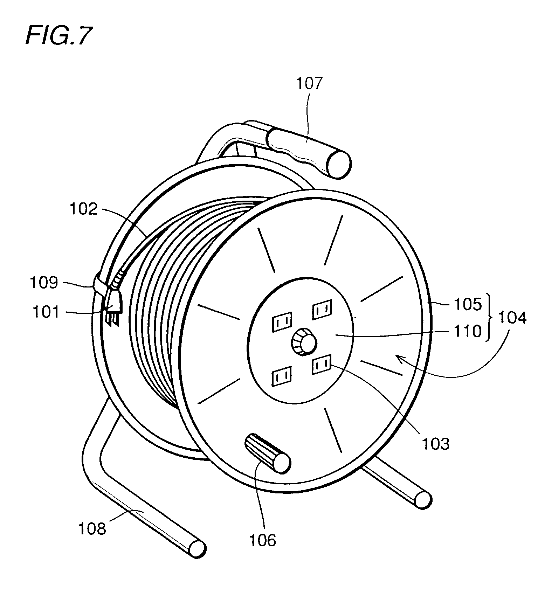

A cable reel is a device from which a cable is drawn to a position to use electric power where a fixed interconnection is not provided for power supply. Various lengths of cables are wound and stored around the cable reel, but the length is typically in the range from several meters to several ten meters. Fig. 7 is a perspective view of a side plate of the front side of a conventional cable reel. This cable reel includes a cable 102, a plug 101 attached at an end of the cable, a rotary drum side plate 104 including a rim 105 and a rotary drum side surface 110, a rotary drum (only side surface 110 is shown), a receptacle 103, a handle 106 and a frame pipe 108 used as a supporting tool. When the cable reel is used, plug 101 is inserted to the receptacle of a power supply which supplies power and a length of the cable necessary is drawn to the position to use power, and the plug of a appliance to use power is inserted to the receptacle 103 of the cable reel. When the cable reel is not used, cable 102 is rewound by handle 106 and stored in the cable reel.

Inventions have been made to prevent the stored cable from being drawn and disarranged because of inadvertent rotation of the rotary drum, particularly during transport. Japanese Utility Model Laying-Open No. 63 - 31067 discloses a stopper tool attached to a plug 101 and having an engaging portion to engage the rim 105 of the rotary drum side plate.

The above described stopper tool prevents the cable from being drawn and being disarranged because of the rotation of the rotary drum when the cable is stored and not used. If the cable is drawn and used for a long time, the cable reel should be prevented from freely rotating. In the operation of drawing out the cable, or after a necessary length of the cable has been drawn, the user may stumble over and kick the cable reel for example, which could cause the cable reel to rotate and allow the cable to be drawn out. The stopper tool according to the above-described invention cannot prevent such rotation in the state in which the cable has been drawn.

Meanwhile, when the cable reel is in a use-preparation state, completely stopping the rotation of the rotary drum is not very much useful even after temporarily stopping drawing out the cable. A desirable stopper tool in the use-preparation state after the cable has been drawn once has such loose restraining force that the stopper tool acts to restrain the rotation of the rotary drum to a certain limited extent, and may allow the length of the cable to be adjusted with prescribed force or greater force applied.

### SUMMARY OF THE INVENTION

One object of the present invention is to provide a stopper tool for cable reel which restrains the cable reel with loose restraining force from rotating irrespectively of whether it is in a state of use, non-use or use-preparation.

A stopper tool for cable reel according to the present invention holds back the rotation of the rotary drum in the cable reel including a cable and includes an engaging portion provided at one end to detachably fit the rim of a side plate of the rotary drum, a winding portion provided at the other end to be wound and engaged around a component forming the cable reel in accordance with the size of the diameter of the component and a bellows portion provided between the engaging portion and the winding portion to generate tensile force when the engaging portion engages the rim of the side plate of the rotary drum and the winding portion is wound around the portion of the cable reel and engaged. In this structure, the cable reel can be prevented from rotating irrespectively of whether the cable reel is in a state of use, non-use or use-preparation. The engagement of the stopper tool can be easily performed by the function of the bellows which can expand/contract or deform arbitrarily and the detachable structure of the engaging portion. Furthermore, since the rim of the side plate simply detachably fits in the engaging portion, it is highly possible that the intensity of engagement can be loosened depending upon the structure and material of the engaging portion. Here, "a component forming the cable reel" means the individual component except the side plates of the rotary drum, which constitutes the whole cable reel.

In the above described stopper tool for cable reel, the winding portion is desirably wound around a frame pipe, a component of the cable reel and engaged. Thus, the stopper tool has its engaging portion at its one end engaged to the rim of the side plate of the rotary drum, and the winding portion at the other end is wound and engaged around the frame pipe, so that the rotation of the cable reel can be prevented irrespectively of whether the cable reel is in a state of use, non-use or use-preparation. Furthermore, the prevention of the rotation may be only loosely performed for the reasons described above.

The stopper tool for cable reel described above desirably has its winding portion wound around and engaged at the cable which is a component of the cable reel. When the model of supporting parts such as frame pipe is changed and the frame pipe is no longer appropriate for the winding portion to be wound around for engagement, the winding portion is wound around and engaged at the cable. As a result, the rotation of the cable reel can be prevented irrespectively of whether the cable reel is in a state of use, non-use or use-preparation. In this case, the winding portion wound around and engaged at the cable desirably has a structure which can be readily wound and engaged.

In the above-described stopper tool, the engaging portion is formed of resin whose elasticity causes the rim of side plate of the rotary drum to be detachably fit, and the intensity of restraining force in the engagement is desirably such that the rotary drum can be rotated to draw out or rewind the cable for adjustment in the engagement state. When an electrical appliance supplied with electricity from the cable reel, an illumination lamp, for example, is to be slightly moved, the cable can be readily drawn out since the restraining force of the stopper tool is mild as described above, and yet the cable is not drawn out unlimitedly so that the arrayed state can be maintained.

In the above stopper tool for cable reel as described above, the winding portion includes a through portion through which passed is the remaining tip end after the other end is wound around the drum component and a waving surface portion having ridges and grooves on the surface extending crossing the direction in which the winding portion extends. Desirably, the tip end of the other end wound around the component of the cable reel is passed through the through portion, and the waving surface portion engages the protruding portion provided in the through portion, so that the tip end of the other end is wound around and engaged at the component of the cable reel. Thus, the winding portion can be very securely wound around and engaged at the component of the cable reel, and the engagement cannot be readily released. If the same state is maintained for a long time, the above-described construction of the winding portion is particularly effective.

Desirably, in the stopper tool for cable reel, the bellows portion and winding portion extend in different directions and continue at a prescribed angle. When the engaging portion provided at one end and the winding portion provided at the other end are both engaged at the component portions of the cable reel at a prescribed distance, the bellows portion and winding portion are linearly continued so that the length of each portion can be more easily fit to the distance for attachment. If the attachment part is not constant among different types of cable reels or even among cable reels of the same type, the bellows portion which can be freely expanded/contracted or deformed and the winding portion are continued at a prescribed angle, and therefore the engagement at both ends can be performed more easily. As a result, cable reels of any types can be readily prevented from rotating using a single stopper tool.

In the stopper tool for cable reel, a cable engaging portion to fit and engage a cable at the tip of one end with the engaging portion is desirably provided. In this construction, the cable can be engaged together with the rim of the side plate of the cable reel or without engaging the rim of the cable reel. As a result, such a state where only the cable is released and disarranged during transport of the cable reel can be prevented. When the cable reel is placed at a high position, it can be prevented that the cable is drawn downward and expanded bit by bit while withstanding the resistance of the engaging portion at the rim of the dram side plate.

In the stopper tool for cable reel having the above-described cable engaging portion, openings directed opposite to each other are desirably provided. Thus, the rim of the cable reel side plate can be engaged by the engaging portion from the top and then engaged by the cable engaging portion to support the cable from below. As a result, the cable engaging portion secures the engagement of the engaging portion by the weight of the cable and plug, and the engaging portion maintains the engagement of the cable to support the cable engaging portion.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view of a stopper tool according to an embodiment of the present invention mounted to a cable reel, viewed from the rear side of the side plate;
Fig. 2 is an expanded view of portion A in Fig. 1;
Fig. 3 is a cross sectional view taken along BOC in Fig. 2;
Fig. 4 is a cross sectional view of a stopper tool for cable reel according to a second embodiment of the present invention;
Fig. 5 is a cross sectional view showing the state in which the rim of the drum side plate is fit in the engaging portion, and the cable is fit in the cable reel engaging portion;
Fig. 6 is a perspective view showing the state in which the rim of the drum side plate is fit in the engaging portion and the cable is fit in the cable reel engaging portion; and
Fig. 7 is a perspective view of a conventional stopper tool mounted at a cable reel, viewed from the front side of a side plate.

### DESCRIPTION OF THE PREFERRED EMBODIMENTS

### First Embodiment

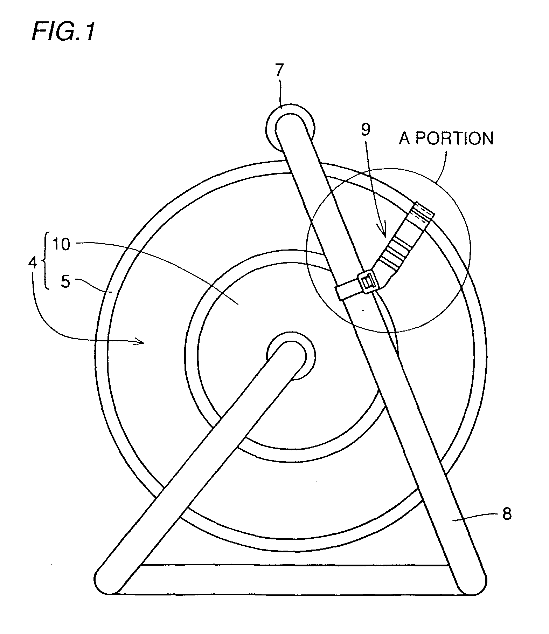

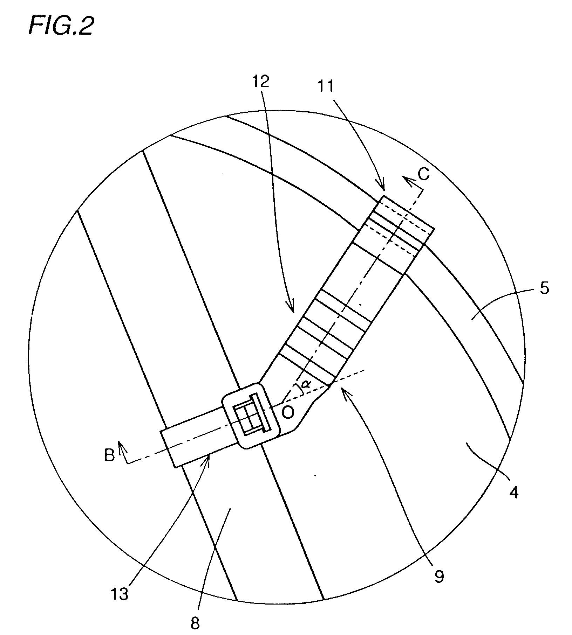

Referring to Figs. 1 to 3, a cable reel includes a side plate 4 including a rim portion 5 and a rotary drum side surface 10, a rotary drum (only side surface 10 is shown), a frame pipe 8, a support frame grip portion 7, and a stopper tool 9. The stopper tool is manufactured by integrally molding polyamide (Nylon 66) by extrusion. The material of the stopper tool is not limited to polyamide, or other kinds of Nylon and resin can be employed. In stopper tool 9, a winding portion 13 and a bellows portion 12 are continued at an angle α (α = 30° for example). By thus arranging these portions consecutively at angle α, after one stopper tool is applied to a certain cable reel and then winding portion 13 is wound around frame pipe 8, the rim 5 of side plate 4 is more easily fit in engaging portion 11 extending in the same direction as bellows portion 12. The bellows portion can be freely expanded/contracted or deformed, and if the bellows portion and winding portion are continued at angle of α as described above, the fitting operation and the like can be extremely easily performed at the engaging portion.

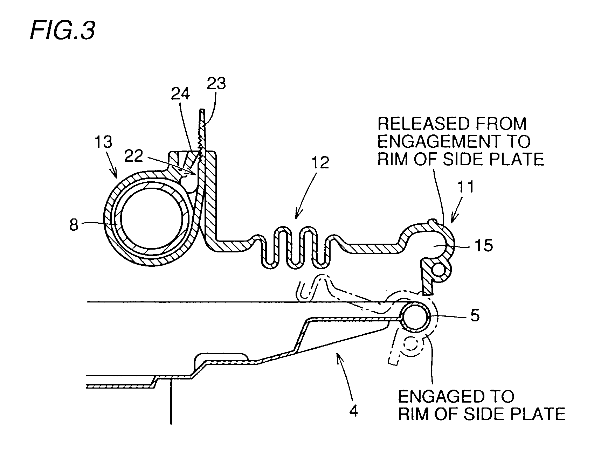

Stopper tool 9 is wound around frame pipe 8 and engaged, or its engaging portion 11 fits the rim 5 of the side plate of the cable reel in a recessed portion 15 as shown in Fig. 3. The remaining part of winding portion 13 is passed through through portion 22, and a waving surface portion 23 provided at the surface near the tip end is engaged with a protruding portion 24 provided at the through portion. If the same winding and engaging state is kept for a long time, the firm winding and engagement structure as described above is preferable. Meanwhile, if the winding and engagement state is continued for a relatively short period of time, a simpler engagement structure is preferable. For example, a through hole is preferably provided in the center of the tip end of the remaining part of the winding portion and a projecting portion provided at the bottom of the winding portion is passed through the through hole for engagement.

Fig.3 shows the state in which frame pipe 8 around which the winding portion of stopper tool 9 is wound and engaged and the side plate 4 of the rotary drum is fixed with engaging portion 11 being engaged at the rim 5 of the side plate as well as the state in which the engagement is released. As can be seen, when the rim 5 of the side plate is fit in recess 15 provided at engaging portion 11, the bellows portion can be effectively expanded/contracted or deformed. The engagement of the engaging portion to the rim of the side plate is performed by elastic fitting by the recess 15 of resin engaging portion 11, the rotation of the side plate is allowed as long as the side plate rim is stored in the recess. Therefore, even if the stopper tool is mounted to hold back the rotation, slow and light rotation so as to allow the length of the cable to be adjusted can be made. The cable in this use-preparation state can be more readily arrayed and adjusted.

By the stopper tool for cable reel according to the present embodiment, the cable reel can be prevented from rotating irrespectively of whether the cable reel is in a state of use, non-use or use-preparation and yet the restraining force is mild, so that the rotation to adjust the length of the cable can be performed with the stopper tool being mounted.

### Second Embodiment

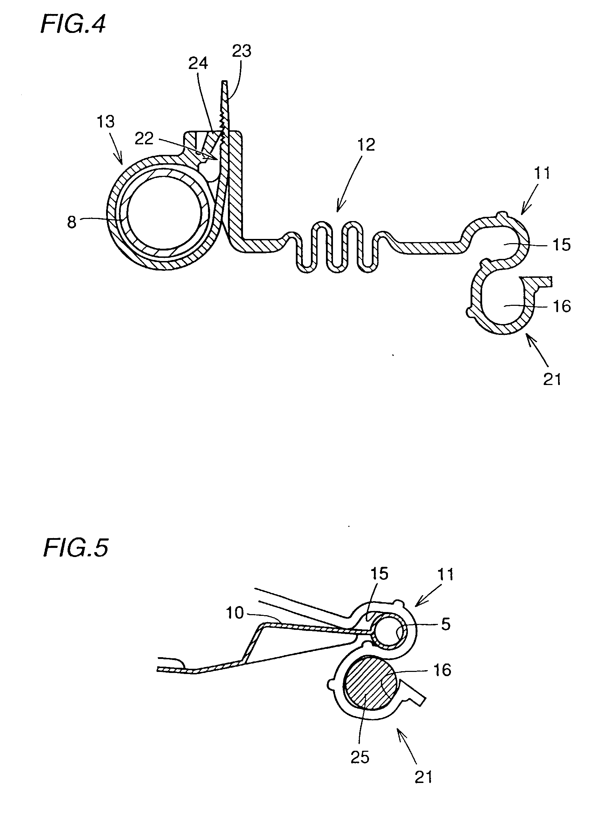

Referring to Fig. 4, a stopper tool according to a second embodiment of the present invention includes in addition to the tool according to the first embodiment a cable engaging portion 21. The other construction of the cable reel is the same as the first embodiment. Cable engaging portion 21 has a recess 16, in which the cable is fit. The direction of the opening of engaging portion 11 to which the rim of the drum side plate is fit and the direction of the opening of cable engaging portion 21 are opposite to each other.

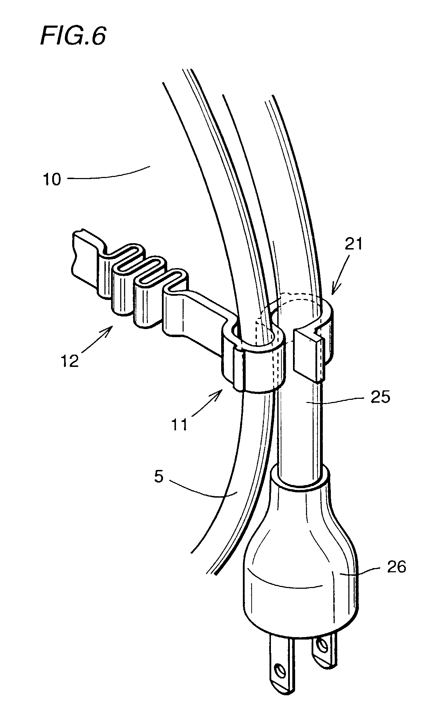

Referring to Fig. 5, with the stopper tool for cable reel according to the second embodiment engaging the rim 5 of drum side plate and cable 25, engaging portion 11 fits the rim 5 of the drum side plate in recess 15, and cable engaging portion 21 fits cable 25 in recess 1G. As shown in Fig. G, engaging portion 11 grasps the rim 5 of the drum side plate from the top and cable engaging portion 21 grasps cable 25 so as to support the cable from below. When the stopper tool for cable reel having the construction shown in Fig. 4 is used, engaging portion 11 can surely grasp the rim 5 of drum side plate by the weight of cable 25 and plug 26. Meanwhile, the grasping of cable 25 by cable engaging portion 21 from below can be maintained stably because engaging portion 11 is supported by the rim 5 of the drum side plate.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A stopper tool (9) for a cable reel for holding back the rotation of a rotary drum in the cable reel including a cable (25), comprising: an engaging portion (11) provided at one end of detachably fitting a rim (5) of a side plate (4) of said rotary drum; a winding portion (13) provided at the other end and wound around a component forming the cable reel in accordance with the size of the diameter of the component; and a bellows portion (12) provided between said engaging portion (11) and winding portion (13) for generating tensile force when said rotary drum is about to be rotated, while said engaging portion (11) fits the rim (5) of the side plate (4) of said rotary drum and said winding portion (13) is wound and engaged around said component.

2. The stopper tool according to claim 1, wherein said winding portion (13) is wound around and engaged at a frame pipe (8) which forms said cable reel.

3. The stopper tool according to claim 1 or 2, wherein said winding portion (13) is wound around and engaged at the cable (25) which forms said cable reel.

4. The stopper tool for according to one of claims 1 to 3, wherein said engaging portion (11) is formed of resin, the rim (5) of a side plate (4) of said rotary drum is detachably fit for engagement by the elasticity of the resin, the degree of restraint in the engagement is such that said rotary drum is allowed to rotate to draw out or rewind said cable (25) for adjustment while said engaged state is maintained.

5. The stopper tool for according to one of claims 1 to 4, wherein said winding portion (13) includes a through portion (22) through which the remaining tip end of said other end portion wound around said cable reel component is passed, and a waving surface portion (23) having ridges and grooves on a surface extending crossing the direction in which the winding portion (13) extends, and the tip end of the other end portion wound around said cable reel component is passed through the through portion (22) and said waving surface portion engages a protruding portion (24) provided at said through portion (22) so that said tip end is wound around the component of said cable reel.

6. The stopper tool according to one of claims 1 to 5, wherein said bellows portion (12) and said winding portion (13) extend in different directions, and continue at a prescribed angle.

7. The stopper tool according to one of claims 1 to 6, further comprising a cable engaging portion (21) for fitting a cable (25) to the tip of one end at which said engaging portion (11) is provided, thereby engaging the cable (25).

8. The stopper tool according to claim 7, wherein said engaging portion (11) and said cable engaging portion (21) have openings formed in the opposite directions from each other.
